# EUROPÄISCHE PATENTSCHRIFT

(11) **EP 1 210 219 B1**
(45) Veröffentlichungstag und Bekanntmachung des Hinweises auf die Patenterteilung: **23.04.2003**
(21) Anmeldenummer: 00963958.4
(22) Anmeldetag: 29.08.2000
(51) Int. Cl.: B29C 45/50

(54) **ELEKTRISCHE PRÄZISIONS-EINSPRITZEINHEIT**
ELECTRIC PRECISION INJECTION UNIT
UNITE D'INJECTION ELECTRIQUE DE PRECISION

(30) Priorität: 08.09.1999 DE 19943709
(43) Veröffentlichungstag der Anmeldung: 05.06.2002
(73) Patentinhaber: Demag Ergotech Wiehe GmbH, 06571 Wiehe (DE)
(72) Erfinder: SCHMIDT, Holger, 06567 Bad Frankenhausen (DE)
(74) Vertreter: Meissner, Peter E., Dipl.-Ing.
(86) Internationale Anmeldenummer: DE0002996
(87) Internationale Veröffentlichungsnummer: WO01017746

(56) Entgegenhaltungen:
- DE-A- 4 344 335
- DE-A- 4 409 822
- US-A- 6 059 556
- PATENT ABSTRACTS OF JAPAN vol. 016, no. 274 (M-1267), 19. Juni 1992 (1992-06-19) -& JP 04 067928 A (SUMITOMO HEAVY IND LTD), 3. März 1992 (1992-03-03) -& DATABASE WPI Week 199215 Derwent Publications Ltd., London, GB; AN 1992-121092 XP002156900
- PATENT ABSTRACTS OF JAPAN vol. 011, no. 125 (M-582), 18. April 1987 (1987-04-18) -& JP 61 266218 A (SUMITOMO HEAVY IND LTD), 25. November 1986 (1986-11-25)
- PATENT ABSTRACTS OF JAPAN vol. 013, no. 593 (M-914), 27. Dezember 1989 (1989-12-27) -& JP 01 249419 A (NISSEI PLASTICS IND CO), 4. Oktober 1989 (1989-10-04)

## Beschreibung

Die Erfindung betrifft eine Spritzgießvorrichtung mit einem Spritzgießzylinder, in dem eine koaxiale Schnecke angeordnet ist, die über Antriebe drehbar und axial verschiebbar ist, mit einer Spindelmutter, die mit einer Schraubenhülse zusammenwirkt, und mit einer Welle, die im Inneren der Schraubenhülse gelagert ist, und die einenends mit der Schnecke verbunden ist und anderenends eine Axialkupplung aufweist, deren eines Kupplungsteil mit einem zweiten Antrieb in Verbindung steht.

Eine derartige Spritzgießvorrichtung ist aus Patent Abstracts of Japan vol. 016, no. 274 (M-1267). 19.07.1992-& JP 04067928 A zu entnehmen.

Aus DE 42 06 966 ist eine Einspritzeinheit bekannt, mit nur einem Antriebsmotor für die axiale und radiale Bewegung der Schnecke. Die Rotationsbewegung der Schnecke erfolgt vom Motor über ein Riementrieb, wobei der eine Riementrieb mit der Schneckenwelle durch ein Keilwellenprofil formschlüssig, aber axial verschiebbar, verbunden ist.

Der hintere Teil der Schneckenwelle ist als Kugelspindel ausgebildet und steht mit der entsprechenden Spindelmutter im Eingriff. Die Kugelspindelmutter ist drehbar im Rahmen gelagert und kann mit einer Klauenkupplung gegenüber dem Rahmen festgelegt werden. Ein Federelement druckt ständig axial die Kugelspindel mit der Spindelmutter gegen den Rahmen.

Während des Plastifiziervorganges von Kunststoff ist die Kupplung nicht im Eingriff. Beim Einspritzvorgang wird die Kupplung aktiviert, so daß die Schnecke bei rotierendem Motor gezwungen wird, sich axial zu bewegen. In dieser konstruktiven Ausführung wird nur ein sehr geringer axialer Hub realisiert.

Desweiteren muß als Nachteil angesehen werden, daß die Schneckenrotation und die axiale Lage nicht unabhängig voneinander beeinflußt werden kann.

EP 0 427 866 beschreibt eine Einspritzeinheit mit einem Dosier- und einem Einspritzmotor, die als Zweiplatten-Einspritzeinheit ausgebildet ist. Die Einspritzeinheit besitzt eine feste Platte, in der zwei Kugelspindeln axial festgelegt sind, und eine bewegliche Platte mit zwei Linearführungen, die über die Kugelspindeln und zugehörigen Kugelspindelmuttern miteinander verbunden sind. Der Dosiermotor ist an der beweglichen Platte befestigt und treibt über ein Riementrieb die Schnecke an (Rotation).

Der Einspritzmotor ist an der festen Platte befestigt und treibt über einen Riementrieb die zwei Kugelspindeln für die axiale Einspritzbewegung der beweglichen Platte an.

Die beschriebene Einspritzeinheit hat einen aufwendigen mechanischen Aufbau und somit sehr viele bewegliche Elemente, die einem erhöhten Wartungsaufwand und Verschleiß zur Folge haben. Da der Einspritzmotor sehr massive Teile der Einspritzeinheit bewegen muß, ist auch das Massenträgheitsmoment hoch und somit die Effektivität und der Wirkungsgrad eingeschränkt.

Ziel der Erfindung ist es, ausgehend von den beschriebenen Problemen und Nachteilen eine überdurchschnittliche wirtschaftlich betreibbare und zuverlässige Spritzgießvorrichtung unter Verwendung teilweiser bekannter Merkmale zu schaffen.

Gelöst wird diese Aufgabe erfindungsgemäß durch die Merkmale des Patentanspruchs 1.

Durch die Integration zweier Antriebe, für die axiale Bewegung und die Schneckenrotation, wird eine äußerst kompakte Bauweise des Antriebsblocks der
Einspritzeinheit erreicht, deren konstruktiver Aufbau auf ein Minimum an Konstruktionsteilen beschränkt ist, wobei ein kurzzeit möglicher Kraftfluß realisiert wird. So wird ein hoher Wirkungsgrad - verbunden mit einer hohen Verfügbarkeit - erreicht.

Eine Antriebswelle mit einem zylindrischen Anschluß für die Schneckenkupplung wird am anderen Ende mit einem Keilwellenprofil mit in einer Schraubenhülse mit zwei axial belastbaren Wälzlagern frei drehbar gelagert. Das Keilwellenprofil der Welle steht mit einer passenden Keilwellen-Axialkupplung im Eingriff, die über ein Getriebe mit dem Servomotor, für die Rotationsbewegung der Schnecke, verbunden ist.

Die Schraubenhülse, vorzugsweise eine Planetenrollspindel, steht mit einer passenden Spindelmutter im Eingriff. Die Spindelmutter ist frei drehbar im Gehäuse des Antriebsblocks der Einspritzeinheit mit zwei axial belastbaren Wälzlagern gelagert. Ein Servomotor treibt über ein Riemenantrieb die Spindelmutter an und je nach Drehrichtung wird die Schraubenhülse und damit auch die Plastifizierschnecke axial in die eine oder andere Richtung bewegt, da die Schraubenhülse eine Verdrehsicherung bewirkt, die in einer Gehäusenut geführt wird und somit ein Mitdrehen der Schraubenhülse verhindert.

Die axiale Bewegung (Einspritzen/Dosieren bzw. Beeinflussung des Druckprofils der Schmelze) und die Rotation der Schnecke (Plastifizieren) können vollständig unabhängig voneinander erfolgen.

Durch diesen konstruktiven Aufbau wird ein kürzest möglicher Kraftfluß bei kleinsten Masseträgheitsmomenten verbunden mit hoher Effizienz bei geringem Wartungsaufwand erreicht.

Nur die gewählte Baulänge der Schraubenhülse und die darauf abgestimmte Länge der Keilwellen-Profilkupplung begrenzt (ein Antriebsblock) den möglichen Einspritzhub der Schnecken.

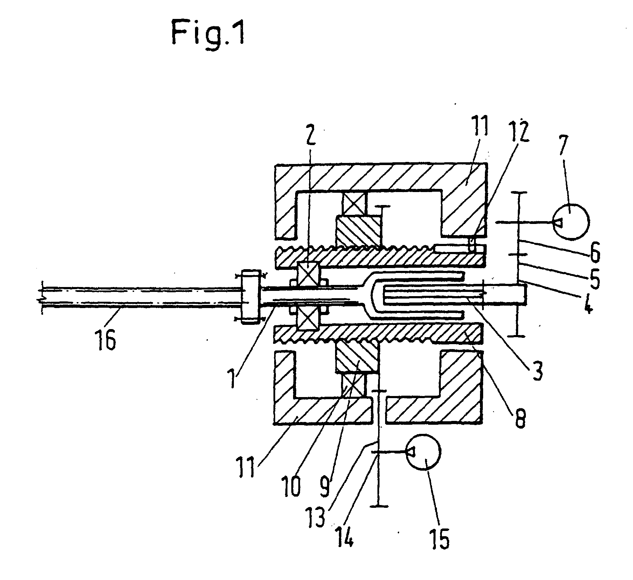

Ein Ausführungsbeispiel der Erfindung ist in der Zeichnung dargelegt und nachfolgend beschrieben. Dabei zeigt
- Figur 1: Den Antriebsblock der Einspritzeinheit in vereinfachter Darstellung.
- Figur 2: Eine praktische Ausführung.
- Figur 3: Einen Schnitt gemäß der Linie A-A.

Die Welle 1 hat an einem Ende ein zylindrisches Teil zum Anschluß der nicht dargestellten Schneckenkupplung und am anderen Ende ein Keilwellenprofil. Die Welle 1 ist mit den Wellenlagern 2 in der Schraubenhülse 8 gelagert und kann sich unabhängig von dieser drehen. Die Radialkräfte und die inbesondere während des Einspritzens auftretenden hohen Axialkräfte werden über die Wellenlager 2 in die Schraubenhülse 8 gleitet.

Mit dem Keilwellenprofil der Welle 1 befindet sich die Keilwellen-Axialkupplung 3 im Eingriff. Die Keilwellen-Axialkupplung 3 ist fest mit der Antriebswelle des Getriebes 4 verbunden, welches mit dem Gehäuse 11 verschraubt ist. Das Drehmoment des Motors 7, der auch am Gehäuse 11 befestigt ist, wird über die Riementriebe 5 und 6 auf das Getriebe 4 übertragen.

Die Spindelmutter 9 steht mit der Schraubenhülse 8 im Eingriff und ist mit dem Spindelmutterlager 10 im Gehäuse 11 drehbar gelagert. Die beim Einspritzen auftretenden hohen Axialkräfte werden über die Spindelmutterlager 10 in das Gehäuse 11 abgeleitet.

Die Spindelmutter 9 besitzt einen Flansch, an dem die Riementriebe 13 und 14 angeflanscht sind und so das Drehmoment von dem am Gehäuse 11 befestigten Getriebemotor 15 und dem Riementrieb übertragen werden kann.

Die Schraubenhülse 8 hat eine Schraubenhülse-Verdrehsicherung 12, die in einem nutförmigen Teil des Gehäuses 11 in axialer Richtung geführt wird und ein Mitdrehen der Schraubenhülse 8 bei rotierender Spindelmutter 9 bzw. Welle 1 verhindert.

Wird die Spindelmutter 9 in Rotation versetzt, dann muß sich die Schraubenhülse 8 mit der Welle 1 zwangsläufig in axiale Richtung bewegen.

Für die direkte momentane Axialkraftmessung ist ein Drucksensor an einem der mit der Axialkraft belasteten Lager vorgesehen.

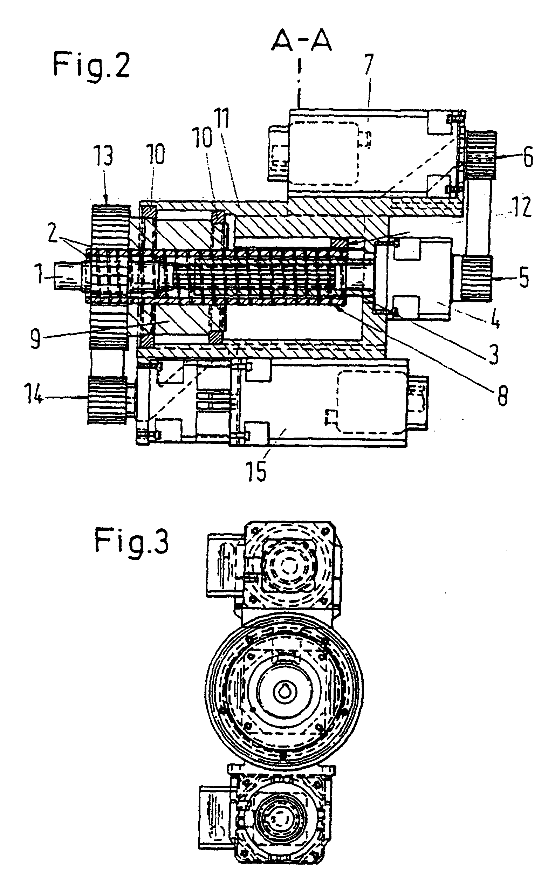

Bei der in Figur 2 und 3 dargestellten praktischen Ausführung sind insbsondere die Antriebe und die Riementriebe in ihrer konstruktiven Anordnung und Ausbildung zu erkennen.

## Patentansprüche

1. Spritzgießvorrichtung mit einem Spritzgießzylinder, in dem eine koaxiale Schnecke angeordnet ist, die über Antriebe drehbar und axial verschiebbar ist, mit einer Spindelmutter (9), die mit einer Schraubenhülse (8) zusammenwirkt, und mit einer Welle (1), die im Inneren der Schraubenhülse (8) gelagert ist, und die einenends mit der Schnecke (16) verbunden ist und anderenends eine Axialkupplung (3) aufweist, deren eines Kupplungsteil mit einem zweiten Antrieb (7) in Verbindung steht,
**dadurch gekennzeichnet,**
**dass** die Spindelmutter (9) in einem Gehäuse (11) gelagert ist und über einen ersten Antrieb (15) verdrehbar ist, und dass bei Verdrehung der Spindelmutter (9) die mit dieser zusammenwirkende Schraubenhülse (8) axial verschiebbar ist, wobei eine mit dem Gehäuse (11) verbundene Verdrehsicherung (12) für die Schraubenhülse (8) vorgesehen ist.

2. Spritzgießvorrichtung nach Anspruch 1,
**dadurch gekennzeichnet,**
**dass** sowohl der zum axialen Verschieben der Schnecke vorgesehene Antrieb (15) wie auch der zum Drehen der Schnecke vorgesehenen Antrieb (7) Elektromotoren sind.

3. Spritzgießvorrichtung nach Anspruch 1,
**dadurch gekennzeichnet,**
**dass** die elektrischen Motoren permanent Magnet erregte Servomotoren sind.

4. Spritzgießvorrichtung nach Anspruch 1,
**dadurch gekennzeichnet,**
**dass** die Schraubenhülse (8) als Kugelrollspindel ausgestaltet ist.

## Claims

1. An injection-moulding device comprising an injection-moulding cylinder in which a coaxial screw is arranged which is rotatably and axially displaceable by means of drive means, comprising a spindle nut (9) which cooperates with a threaded sleeve (8), and comprising a shaft (1) which is mounted in the interior of the threaded sleeve (8) and which is connected at one end to the screw (16) and at the other end has an axial coupling (3), one coupling part of which is connected to a second drive means (7),
**characterised in that**
the spindle nut (9) is mounted in a housing (11) and can be rotated by means of a first drive means (15), and that upon rotation of the spindle nut (9) the threaded sleeve (8) which cooperates therewith is axially displaceable, an anti-turning means (12) connected to the housing (11) being provided for the threaded sleeve (8).

2. An injection-moulding device according to Claim 1, **characterised in that** both the drive means (15) provided for axially displacing the screw and the drive means (7) provided for rotating the screw are electric motors.

3. An injection-moulding device according to Claim 1, **characterised in that** the electric motors are permanently magnet-excited servo motors.

4. An injection-moulding device according to Claim 1, **characterised in that** the threaded sleeve (8) is designed as a ball screw drive.

## Revendications

1. Dispositif de coulée par injection, comportant un cylindre de coulée par injection, dans lequel est agencée une vis sans fin coaxiale, qui est déplaçable axialement et en rotation par l'intermédiaire d'entraînements, un écrou (9) qui coopère avec un manchon fileté (8), et un arbre (1) qui est monté à l'intérieur du manchon fileté (8), et qui, à une extrémité, est relié à la vis sans fin (16) et, à l'autre extrémité, présente un couplage axial (3), dont une partie de couplage est reliée à un second entraînement (7),
**caractérisé en ce que** l'écrou (9) est monté dans un boîtier (11) et peut être tourné par un premier entraînement (15), et **en ce que**, lors de la rotation de l'écrou (9), le manchon fileté (8) coopérant avec celui-ci peut être déplacé axialement, une sécurité en torsion (12), reliée au boîtier (11), pour le manchon fileté (8) étant prévue.

2. Dispositif de coulée par injection selon la revendication 1, **caractérisé en ce qu'**aussi bien l'entraînement (15) prévu pour le déplacement axial de la vis sans fin qu'également l'entraînement (7) prévu pour faire tourner la vis sans fin sont des moteurs électriques.

3. Dispositif de coulée par injection selon la revendication 1, **caractérisé en ce que** les moteurs électriques sont des servomoteurs excités par un aimant permanent.

4. Dispositif de coulée par injection selon la revendication 1, **caractérisé en ce que** le manchon fileté (8) est réalisé comme axe fileté à billes.
